(19) Europäisches Patentamt
European Patent Office
Office européen des brevets

(11) Veröffentlichungsnummer: **0 629 721 A2**

(12) **EUROPÄISCHE PATENTANMELDUNG**

(21) Anmeldenummer: **94108423.8**

(22) Anmeldetag: **01.06.94**

(51) Int. Cl.5: **D01F 6/70**

(30) Priorität: **16.06.93 DE 4319953**

(43) Veröffentlichungstag der Anmeldung:
**21.12.94 Patentblatt 94/51**

(84) Benannte Vertragsstaaten:
**AT BE CH DE DK ES FR GB GR IE IT LI NL PT SE**

(71) Anmelder: **BASF Aktiengesellschaft**
**Carl-Bosch-Strasse 38**
**D-67063 Ludwigshafen (DE)**

(72) Erfinder: **Matthies, Hans Georg, Dr.**
**Homburger Strasse 2**
**D-67063 Ludwigshafen (DE)**
Erfinder: **Groll, Peter, Dr.**
**Lorscher Strasse 9**
**D-67125 Dannstadt-Schauernheim (DE)**

(54) **Klebfreie, hochelastische mono- und multifile Polyester-Polyurethan-Elastomerfäden, Verfahren zu ihrer Herstellung durch Schmelzspinnen und ihre Verwendung.**

(57) Gegenstände der Erfindung sind klebfreie, hochelastische mono- und multifile Polyester-Polyurethan-Elastomerfäden, die hergestellt werden nach dem Schmelzspinnprozeß aus einem teilvernetzten thermoplastischen Polyurethan, das seinerseits erhältlich ist durch Umsetzung von

a) mindestens einem organischen Diisocyanat mit
b) mindestens einem Polyester-diol mit einem Molekulargewicht von 500 bis 5000,
c) mindestens einem difunktionellen Hydroxylgruppen enthaltenden Kettenverlängerungsmittel mit einem Molekulargewicht von 62 bis 380, und
d) mindestens einem mindestens trifunktionellen Hydroxylgruppen enthaltenden Vernetzungsmittel,

ein Verfahren zu ihrer Herstellung durch Schmelzspinnen und ihre Verwendung zur Herstellung von Fasern und textilen Flächengebilden.

EP 0 629 721 A2

Gegenstände der Erfindung sind klebfreie, hochelastische mono- und multifile Polyester-Polyurethan-Elastomerfäden, im folgenden auch abgekürzt PES-PU-Fäden genannt, die hergestellt werden durch Verspinnen einer Schmelze aus einem teilvernetzten thermoplastischen Polyurethan, im folgenden auch abgekürzt TPU genannt, das erhältlich ist durch Umsetzung von

a) mindestens einem organischen Diisocyanat mit

b) mindestens einem Polyester-diol mit einem Molekulargewicht von 500 bis 5000, vorzugsweise hergestellt durch Polykondensation mindestens einer Dicarbonsäure und mindestens einem Alkandiol und/oder Alkylen-glykol, durch Polykondensation mindestens einer $\omega$-Hydroxycarbonsäure oder durch Polymerisation mindestens eines $\omega$-Lactons,

c) mindestens einem difunktionellen Hydroxylgruppen enthaltenden Kettenverlängerungsmittel mit einem Molekulargewicht von 62 bis 380, und

d) mindestens einem mindestens trifunktionellen Hydroxylgruppen enthaltenden Vernetzungsmittel,

ein Verfahren zu ihrer Herstellung mit Hilfe des Schmelzspinnprozesses und ihre Verwendung zur Herstellung von Fasern und textilen Flächengebilden.

Es ist bekannt, Polyurethan(PU)-Fäden aus PU-Elastomeren auf der Grundlage von organischen Diisocyanaten, hochmolekularen Dihydroxyverbindungen und niedermolekularen Kettenverlängerungsmitteln, wie z.B. Alkandiolen und/oder Diaminen herzustellen. Das Elastomerverhalten dieser Polyurethane beruht auf der durch Segment- oder Blockstruktur, d.h. durch eine bestimmte Anordnung der sogenannten Hart- und Weichphase, bedingten Entropieelastizität. Es wird beeinflußt von den verwendeten Ausgangsstoffen, dem Syntheseverfahren, dem Spinnprozeß und der Nachbehandlung.

Da die aus Diaminen gebildete Harnstoffstrukturen nicht unzersetzt schmelzen, ist eine Verspinnung derartiger PU-Elastomerer nach dem wirtschaftlichen und umweltfreundlichen Schmelzspinnverfahren nicht möglich. Die Fadenbildung erfolgt z.B. beim Naßspinnprozeß durch Koagulation des gelösten Polyurethans in nichtlösenden, meist wäßrigen Fällbädern und beim Reaktiv-Spinnprozeß durch eine Vereinigung der Kettenverlängerung eines NCO-Prepolymeren mit einem Diamin und der Fadenbildung simultan im Spinnbad. Harnstoffstrukturfreie, auf höher- und niedermolekularen Dihydroxyverbindungen basierende PU-Elastomere sind zwar schmelzspinnbar, weisen aber eine zu niedrige Wärmeformbeständigkeit auf, die sich nachteilig auf die Verspinnung, z.B. wegen ihrer starken Klebneigung, und textile Weiterverarbeitung, z.B. Thermofixierung, Färben, Waschen und Bügeln, auswirkt. Die Schmelzextrusion als die an sich rationellste Spinntechnik ist somit auf TPU nicht anwendbar (Kunststoff-Handbuch, Band 7, Polyurethane, 2. Auflage, 1983, Seiten 611 bis 627, herausgegeben von Dr. G. Oertel, Carl Hanser-Verlag, München, Wien).

Zur Vermeidung der Klebrigkeit wurden z.B. ein spezielles Abschreckungsverfahren für die versponnenen Fäden, die Anwendung von Antiklebemitteln und die Anwendung von Tris-(2-hydroxyethyl)isocyanurat beim Spinnverfahren vorgeschlagen. Aber auch durch diese Maßnahmen konnte das Problem nicht zufriedenstellend gelöst werden.

Nach Angaben der DE-A-22 04 470 (CA-A-999 394) wurden daher zur Reduzierung der Verklebung von extrudierten PU-Endlosfäden Polyimidgruppen in die Polyurethankette eingebaut oder nachträglich Polyimide der Polyurethanschmelze einverleibt. Die mit den erhaltenen Polyurethanmassen hergestellten PU-Fäden müssen jedoch mit sehr niedrigen Geschwindigkeiten aufgewickelt und in einem zweiten Arbeitsgang verstreckt werden, so daß die Produktivität unzureichend und das Verfahren unwirtschaftlich ist. Nachteilig ist ferner, daß durch den Zusatz von Additiven eine Erniedrigung des Molekulargewichts des Polymeren bewirkt wird, womit ein Absinken der Schmelzviskosität einhergeht, die wiederum die elastischen Eigenschaften, die Reißdehnung und die Festigkeit des resultierenden Garns negativ beeinflußt.

Aus der DE-A-19 44 507 (GB-A-1 245 311) ist ein mehrstufiges Verfahren bekannt, das die Klebrigkeit von PU-Fäden beim Schmelzspinnen vermindert. Nach diesem Verfahren wird in der ersten Stufe schmelzextrudiert, der erhaltene Faden durch Abschrecken verfestigt und in der zweiten Stufe um mindestens 30 % verstreckt und in einer weiteren Stufe um mindestens 50 % vor dem Aufwickeln relaxiert. Der Verfahrensablauf deutet darauf hin, daß auf der Abzugsgalette bereits der fertiggestellte, völlig erkaltete PU-Faden vorliegt. Dieser zeigt die typischen Eigenschaften eines PU-Elastomeren, d.h. er läßt sich nicht mehr im eigentlichen Sinne verstrecken, aufgrund seiner hohen Elastizität wohl aber stark dehnen, wobei diese Dehnung reversibel ist.

Nach Angaben der WO 88/04703 kann die Klebrigkeit der PU-Fäden aufeinander und der Fibrillen untereinander vermieden werden und ein hochmoduliger und besser verarbeitbarer Faden hergestellt werden, wenn man das Polyurethan und die Streckbedingungen so auswählt, daß eine irreversible Verstreckung einsetzt, man auf die Entspannung/Relaxation verzichtet und die Abzugsgeschwindigkeit zusätzlich erhöht. Nach diesem Verfahren können TPU mit einem Erweichungspunkt zwischen 180 und 230 °C, einer Härte von 80 bis 95 Shore A und einer Dichte von 1,1 bis 1,25 g/cm$^3$ verarbeitet werden, wobei insbesondere die Härte des TPU für die Klebrigkeit des PU-Fadens eine wichtige Rolle spielt.

Nachteilig an dieser Methode ist die niedrige Elastizität des erhaltenen PU-Fadens und das komplizierte Spinnverfahren.

Klebfreie, durch Schmelzspinnen herstellbare PU-Fäden sind gemäß DE-A-3 911 725 aus Weichmacher enthaltenden TPU zugänglich. Nachteilig an diesen PU-Fäden, die eine hohe Reißfestigkeit, eine niedrige plastische Deformation und eine hohe elastische Erholung aufweisen, ist allenfalls ihre Neigung zum Ausschwitzen des Weichmachers unter bestimmten Reaktionsbedingungen der Weiterverarbeitung.

Thermoplastisch verarbeitbare PU-Elastomere, die sich u.a. durch Schmelzspinnen zu Elastomerfasern verarbeiten lassen, können ferner nach Angaben der DE-A-32 33 384 (US-A-4 442 281) hergestellt werden durch Polyaddition von im wesentlichen reinem trans-Cyclohexan-1,4-diisocyanat, Diolen mit einem Molekulargewicht von 800 bis 4000 und bisethoxyliertem Bisphenol A oder Gemischen aus bisethoxyliertem Bisphenol A und anderen kurzkettigen Diolen als Kettenverlängerungsmitteln. Nachteilig an diesem TPU ist die relativ schwierige und daher teuere Herstellung der Ausgangskomponente trans-Cyclohexan-1,4-diisocyanat und die relativ geringe Wärmeformbeständigkeit des TPU, die Textilnachbehandlungen der Fasern, z.B. Färben, Thermofixierung u.a. bei erhöhten Temperaturen erschwert oder gar unmöglich macht.

Die Aufgabe der vorliegenden Erfindung bestand darin, die obengenannten Nachteile ganz oder zumindest teilweise zu beseitigen und ein vereinfachtes, verbessertes Verfahren zur Herstellung von klebfreien, hochelastischen, mono- und multifilen PU-Fäden durch Schmelzspinnen von TPU zu entwickeln. Ein hierfür verwendbares TPU sollte eine hohe Wärmeformbeständigkeit aufweisen, schmelzspinnbar sein und auf technisch gut zugänglichen und daher preiswerten Aufbaukomponenten basieren. Die aus diesem TPU hergestellten Fäden sollten klebfrei und hochelastisch sein und sich durch eine gute textile Weiterverarbeitbarkeit auszeichnen.

Diese Aufgabe konnte überraschenderweise gelöst werden durch die Verwendung eines speziellen teilvernetzten TPU auf der Grundlage von Polyester-diolen.

Gegenstand der Erfindung sind somit klebfreie, hochelastische mono- und multifile Polyester-Polyurethan-Elastomerfäden, die hergestellt werden durch Verspinnen einer Schmelze aus einem teilvernetzten TPU, das erhältlich ist durch Umsetzung von

a) mindestens einem organischen, vorzugsweise aromatischen Diisocyanat mit

b) mindestens einem Polyester-diol mit einem Molekulargewicht von 500 bis 5000,

c) mindestens einem difunktionellen Hydroxylgruppen enthaltenden Kettenverlängerungsmittel mit einem Molekulargewicht von 62 bis 380 und

d) mindestens einem mindestens trifunktionellen Hydroxylgruppen enthaltenden Vernetzungsmittel.

Gegenstände der Erfindung sind ferner ein Verfahren zur Herstellung der klebfreien, hochelastischen mono- und multifilen PES-PU-Fäden durch Schmelzspinnen des erfindungsgemäß verwendbaren teilvernetzten TPU nach Anspruch 12, wobei die teilvernetzten TPU vorzugsweise nach dem one shot-Verfahren hergestellt werden, und die Verwendung der erfindungsgemäßen klebfreien, hochelastischen mono- und multifilen PES-PU-Fäden zur Herstellung von Textilfasern, textilen Flächengebilden und technischen Fasern nach Anspruch 15.

Durch den Zusatz von mindestens trifunktionellen, vorzugsweise trifunktionellen Hydroxylgruppen enthaltenden Vernetzungsmitteln kann die Wärmeformbeständigkeit des TPU erhöht werden, ohne daß dadurch die Spinnfähigkeit der TPU-Schmelze nachteilig beeinflußt wird.

Die aus dem teilvernetzten TPU durch Schmelzspinnen hergestellten PES-PU-Fäden zeigen im Vergleich zu aus unvernetztem TPU erhaltenen PU-Fäden eine verbesserte Reißfestigkeit bei zumindest gleicher, vielfach sogar höherer Dehnung. Vorteilhaft ist insbesondere, daß die erfindungsgemäßen PES-PU-Fäden, aufgrund der höheren Verklebungstemperatur des teilvernetzten TPU, problemlos klebfrei aufgespult werden können und dadurch mitbedingt eine sehr gute Weiterverarbeitbarkeit im Textilbereich aufweisen. Die erfindungsgemäßen PES-PU-Fäden sind hochelastisch.

Zur Herstellung der erfindungsgemäß verwendbaren, partiell vernetzten TPU, den Ausgangskomponenten hierfür sowie zur Herstellung der klebfreien, hochelastischen mono- und multifilen PES-PU-Fäden möchten wir im einzelnen folgendes ausführen:

a) Als organische Diisocyanate (a) kommen beispielsweise aliphatische, cycloaliphatische und vorzugsweise aromatische Diisocyanate in Betracht. Im einzelnen seien beispielhaft genannt: aliphatische Diisocyanate mit vorteilhafterweise 4 bis maximal 12 C-Atomen im Alkylenrest, wie z.B. Hexamethylen-diisocyanat, cycloaliphatische Diisocyanate, wie z.B. Isophorondiisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und vorzugsweise aromatische Diisocyanate, wie z.B. 2,4-Toluylen-diisocyanat, Gemische aus 2,4- und 2,6-Toluylen-diisocyanat, 4,4'-, 2,4'- und 2,2'-Diphenylmethan-diisocyanat,Gemische aus 2,4'- und 4,4'-Diphenylmethandiisocyanat und 4,4'-Diisocyanato-diphenylethan-(1,2). Vorzugsweise verwendet werden 1,6-Hexamethylen-diisocyanat, Isophoron-diisocyanat, Diphenylmethan-diisocyanat-Isomerengemische mit einem 4,4'-Diphenylmethan-diisocyanatgehalt von größer als 96 Gew.-% und insbesondere 4,4'-Diphenylmethan-diisocyanat.

b) Als Polyester-diole (b) mit einem Molekulargewicht von 500 bis 5000, vorzugsweise von 800 bis 3200 und insbesondere von 1500 bis 2500 kommen Polykondensationsprodukte in Betracht, die hergestellt werden können durch Polykondensation von Dicarbonsäuren mit 2 bis 12 C-Atomen, vorzugsweise Alkandicarbonsäuren mit 2 bis 12 C-Atomen, insbesondere 4 bis 6 C-Atomen oder Mischungen aus Alkandicarbonsäuren und aromatischen Dicarbonsäuren und Alkandiolen mit 2 bis 12 C-Atomen, vorzugsweise 2 bis 6 C-Atomen oder Alkylenglykolen mit 4 bis 8 C-Atomen, vorzugsweise 4 bis 6 C-Atomen oder Mischungen aus Alkandiolen und Alkylenglykolen. Die Alkandiole oder Alkylenglykole können jeweils sowohl einzeln als auch in Form von Mischungen eingesetzt werden. Als Alkandicarbonsäuren eignen sich beispielsweise Oxalsäure, Bernsteinsäure, Glutarsäure-Pimelinsäure, Korksäure, Azelainsäure, Selacinsäure, Undecandisäure, Dodecandisäure und vorzugsweise Adipinsäure. Als aromatische Dicarbonsäure wird vorzugsweise Terephthalsäure verwendet. Anstelle der freien Dicarbonsäuren können auch die entsprechenden Dicarbonsäurederivate, wie z.B. Dicarbonsäuremono- und/oder -diester von Alkoholen mit 1 bis 4 Kohlenstoffatomen oder Dicarbonsäureanhydride eingesetzt werden. Beispiele für Alkandiole oder Alkylenglykole sind: Ethandiol, Diethylenglykol, 1,2- bzw. 1,3-Propandiol, Dipropylenglykol, 1,4-Butandiol, 1,5-Pentandiol, 1,6-Hexandiol, 1,7-Heptandiol, 1,8-Octandiol, 1,9-Nonandiol, 1,10-Decandiol, 1,2-Dodecandiol, 2,2-Dimethyl-propandiol-1,3, 2,3-Butandiol, 2,5-Hexandiol, 2,5-Dimethyl-hexandiol-2,5 und 2,4,4- bzw. 2,2,4-Trimethyl-hexandiol-1,6.Vorzugsweise verwendet werden Ethandiol, Diethylenglykol, 1,4-Butandiol, 2,2-Dimethyl-propandiol-1,3 (Neopentylglykol), 1,5-Pentandiol, 1,6-Hexandiol oder Mischungen aus mindestens zwei Alkandiolen, beispielsweise Mischungen aus 1,4-Butandiol/1,6-Hexandiol, Neopentylglykol/1,6-Hexandiol, Ethandiol/1,4-Butandiol, Ethandiol/1,6-Hexandiol und 1,4-Butandiol/1,5-Pentandiol/1,6-Hexandiol. Als Polykondensationsprodukte vorzugsweise verwendet werden Alkandiol-polyadipate, insbesondere Ethandiol-polyadipate, 1,2-Propandiol-polyadipate, 1,4-Butandiolpolyadipate, 1,6-Hexandiol-polyadipate, 1,4-Butandiol-1,6-Hexandiol-Adipinsäurepolyester und Neopentylglykol-1,6-Hexandiol-Adipinsäurepolyester.

Zur Herstellung der Polyester-diole können die Dicarbonsäuren, vorzugsweise Alkandicarbonsäuren und/oder -derivate und Alkandiole und/oder Alkylenglykole katalysatorfrei oder vorzugsweise in Gegenwart von Veresterungskatalysatoren, zweckmäßigerweise in einer Atmosphäre aus Inertgasen, wie z.B. Stickstoff, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyester-diole werden die organischen Dicarbonsäuren und/oder -derivate und Alkandiole und/oder Alkylenglykole vorteilhafterweise im Molverhältnis von 1:1 bis 1,8, vorzugsweise 1:1,05 bis 1,2 polykondensiert.

Als Polyester-diole eignen sich ferner Polykondensationsprodukte, hergestellt aus $\omega$-Hydroxycarbonsäuren mit 4 bis 12 C-Atomen, vorzugsweise 4 bis 8 C-Atomen, wie z.B. 4-Hydroxybuttersäure, 5-Hydroxy-valeriansäure, 8-Hydroxy-caprylsäure und vorzugsweise 6-Hydroxy-capronsäure und Polymerisationsprodukte aus $\omega$-Lactonen mit 4 bis 12 C-Atomen, vorzugsweise 4 bis 8 C-Atomen, wie z.B. $\gamma$-Butyrolacton, $\delta$-Valerolacton, 8-Hydroxy-octansäurelacton, 10-Hydroxy-decansäure-lacton, 12-Hydroxy-dodecansäurelacton und vorzugsweise $\epsilon$-Caprolacton.

c) Als difunktionelle Hydroxylgruppen enthaltende Kettenverlängerungsmittel mit einem Molekulargewicht von 62 bis 380, vorzugsweise von 62 bis 210, kommen vorzugsweise Alkandiole mit 2 bis 12 Kohlenstoffatomen, vorzugsweise 4 und/oder 6 Kohlenstoffatomen, wie z.B. Ethandiol, Propandiol-1,3, Butandiol-1,4, Pentandiol-1,5, Hexandiol-1,6, Heptandiol-1,7, Octandiol-1,8, Decandiol-1,10 und Dodecandiol-1,12 und Dialkylen-glykole wie z.B. Diethylen-, Dipropylen- und Dibutylenglykol in Betracht.

Geeignet als Kettenverlängerungsmittel sind jedoch beispielsweise auch Diester der Terephthalsäure mit Glykolen mit 2 bis 4 Kohlenstoffatomen, wie z.B. Terephthalsäure-bis-ethylenglykol oder -butandiol-1,4 und Hydroxyalkylenether des Hydrochinons, wie z.B. 1,4-Di-($\beta$-hydroxyethyl)-hydrochinon.

4

Als Kettenverlängerungsmittel vorzüglich bewährt haben sich und daher vorzugsweise verwendet werden Hexandiol-1,6 und insbesondere Butandiol-1,4 oder Mischungen aus Hexandiol-1,6 und Butandiol-1,4.

d) Wesentlich für die Herstellung der erfindungsgemäß verwendbaren teilvernetzten TPU ist der Einsatz mindestens eines, mindestens trifunktionellen, vorzugsweise tri- bis octafunktionellen und insbesondere trifunktionellen Hydroxylgruppen enthaltenden Vernetzungsmittels (d). Derartige Vernetzungsmittel besitzen vorteilhafterweise ein Molekulargewicht von 90 bis 400, vorzugsweise von 90 bis 138. Als geeignete Vernetzungsmittel seien beispielhaft genannt: Glycerin, Trimethylolpropan, mit bis zu 3 Molen Alkylenoxid z.B. Ethylenoxid alkoxyliertes Glycerin und/oder Trimethylolpropan, Pentaerythrit, Sorbit und Sucrose, wobei Glycerin oder Trimethylolpropan oder Mischungen aus Glycerin und Trimethylolpropan insbesondere bevorzugt eingesetzt werden.

Zur Einstellung von Härte und Schmelzpunkt der TPU können die Aufbaukomponenten (b) bis (d) in relativ breiten molaren Verhältnissen variiert werden. Vorzüglich bewährt haben sich molare Verhältnisse von Polyester-diolen (b) zu Kettenverlängerungsmittel (c) z.B. von 1:0,5 bis 1:20, vorzugsweise 1:1 bis 1:10 und insbesondere 1:1 bis 1:5, und ein Zusatz von Vernetzungsmittel (d) in einer Menge z.B. von 0,01 bis 10 Mol-%, vorzugsweise 0,3 bis 5 Mol-% und insbesondere 0,5 bis 4,0 Mol-%, bezogen auf die Molmasse der Polyesterdiole (b).

Zur Herstellung der erfindungsgemäß verwendbaren teilvernetzten TPU werden die Aufbaukomponenten (a) bis (d) vorteilhafterweise in solchen Mengen zur Reaktion gebracht, daß das Äquivalenzverhältnis von NCO-Gruppen der Diisocyanate (a) zur Summe der OH-Gruppen der Polyhydroxylverbindungen (b) bis (d) 0,9 bis 1,1:1, vorzugsweise 0,95 bis 1,05:1 und insbesondere 0,98 bis 1,03:1 beträgt. Die Polyhydroxylverbindungen (b) bis (d) werden vorteilhafterweise in Form einer Mischung mit dem Diisocyanat (a) zur Reaktion gebracht.

e) Die erfindungsgemäß verwendbaren teilvernetzten TPU werden vorzugsweise in Abwesenheit von Katalysatoren (e) hergestellt. Je nach Art der verwendeten Ausgangskomponenten (a) bis (d) und insbesondere deren Reaktivität kann es jedoch zweckmäßig sein, die Reaktion zwischen den NCO-Gruppen der Diisocyanate (a) und den Hydroxylgruppen der Aufbaukomponenten (b) bis (d) durch den Einsatz von Katalysatoren zu beschleunigen. Geeignete Katalysatoren sind beispielsweise die aus dem Stand der Technik bekannten tertiären Amine wie z.B. Triethylamin, N,N-Dimethylcyclohexylamin, N-Methylmorpholin, N,N'-Dimethyl- bzw. -Diethyl-piperazin, Tris-(dimethylaminoethyl)-(s)-triazin, Pentamethyl-diethylen-triamin, N,N,N',N'-Tetramethyl-butylen-diamin, N,N,N',N'-Tetramethyl-4,4'-diamino-dicyclohexylmethan, 2-(Dimethylaminoethoxi)-ethanol und Diazabicyclo-(2,2,2)-octan und insbesondere organische Metallverbindungen wie z.B. Titansäureester, Eisenverbindungen, Zinnverbindungen, z.B. Zinndiacetat, Zinndioctoat, Zinndilaurat oder die Zinndialkylsalze aliphatischer Carbonsäuren wie z.B. Dibutylzinndiacetat, Dibutylzinndilaurat sowie Mischungen aus tertiären Aminen und organischen Metallverbindungen. Die Katalysatoren werden üblicherweise in Mengen von 0,001 bis 0,1 Gew.-Teilen pro 100 Gew.-Teilen der Polyhydroxylverbindungen (b) bis (d) eingesetzt.

f) Neben Katalysatoren können den Aufbaukomponenten gegebenenfalls auch Hilfsmittel und/oder Zusatzstoffe (f) einverleibt werden. Genannt seien beispielsweise Gleitmittel, Inhibitoren, Stabilisatoren gegen Hydrolyse, Licht, Hitze oder Verfärburg, z.B. durch Chlorangriff, Flammschutzmittel, Farbstoffe und Pigmente.

Nähere Angaben über die obengenannten Hilfsmittel und Zusatzstoffe (f) sind der Fachliteratur, beispielsweise der Monographie von J.H. Saunders und K.C. Frisch, "High Polymers", Band XVI, Polyurethane, Teile 1 und 2, Verlag Interscience Publishers 1962 bzw. 1964 oder der DE-A 29 01 774 zu entnehmen.

Die erfindungsgemäß verwendbaren teilvernetzten TPU werden vorzugsweise nach dem one shot-Verfahren hergestellt. Die TPU können hierbei erhalten werden nach dem Extruder- oder vorzugsweise Bandverfahren durch batchweises oder kontinuierliches Mischen der Aufbaukomponenten (a) bis (d) sowie gegebenenfalls (e) und/oder (f), Ausreagierenlassen der Reaktionsmischung im Extruder oder auf einem Trägerband bei Temperaturen von 40 bis 230°C, vorzugsweise 70 bis 180°C und anschließendes Granulieren der erhaltenen TPU.

Nach dem bevorzugt angewandten Bandverfahren werden die Aufbaukomponenten (a) bis (d) und gegebenenfalls (e) und/oder (f) bei Temperaturen oberhalb des Schmelzpunktes der Aufbaukomponenten (a) bis (d) mit Hilfe eines Mischkopfes kontinuierlich gemischt. Die Reaktionsmischung wird auf einen Träger, vorzugsweise ein Förderband, z.B. aus Metall, aufgebracht und mit einer Geschwindigkeit von 1 bis 20 m/Minute, vorzugsweise von 4 bis 10 m/Minute durch eine temperierte Zone von 1 bis 20 m, vorzugsweise 3 bis 10 m Länge geführt. Die Reaktionstemperatur in der temperierten Zone beträgt 60 bis 200°C, vorzugsweise 100 bis 180°C. Die erhaltenen teilvernetzten TPU können nach dem Abkühlen granuliert und gegebenenfalls gelagert werden.

Die erfindungsgemäßen klebfreien, hochelastischen mono- und multifilen PES-PU-Fäden können nach an sich bekannten Schmelzspinnverfahren hergestellt werden. Insbesondere geeignet zur Herstellung sind und daher bevorzugt angewendet werden Extruder-Schmelzspinnanlagen, die neben der üblicherweise angewandten Luftkühlung, z.B. mittels eines Anblasschachts, wahlweise mit einer Wasserkühlvorrichtung zur Kühlung der frisch gesponnenen PES-PU-Fäden ausgerüstet werden können.

Nach einer bevorzugt angewandten Verfahrensvariante zur Herstellung der erfindungsgemäßen PES-PU-Fäden werden die erfindungsgemäß geeigneten TPU in einem Extruder in Abhängigkeit vom jeweils eingesetzten teilvernetzten TPU bei einer Temperatur im Bereich von 150 bis 250°C, vorzugsweise von 170 bis 230°C aufgeschmolzen, die Schmelze mit Hilfe einer Zahnrad-Spinnpumpe und Ein- oder Mehrloch-Spinndüse mit Schmelzfiltration zu Fäden geformt und die so erhaltenen Fäden je nach angewandter Abzugsgeschwindigkeit durch Wasser- oder Luftkühlung abgekühlt und auf konventionellen Spulaggregaten aufgewickelt.

Das Aufspulen der erfindungsgemäß hergestellten PES-PU-Fäden erfolgt vorteilhafterweise unter zusätzlichem Auftragen einer Spinnpräparation auf Basis von z.B. Silikon- oder Kieselsäuredispersionen, die das an sich schon im wesentliche klebfreie Aufspulen und Abwickeln von der Spinnspule sowie die problemlose Weiterverarbeitung der mono- und multifilen PES-PU-Fäden zusätzlich verbessern.

Derartige Spinnpräparationen sind bekannte Handelsprodukte. Geeignete Spinnpräparationen auf der Grundlage von Polysiloxan-Elastomeren oder Gemischen aus Polysiloxanen und einer Siliciumverbindung sind z.B. unter dem Warenzeichen Siligen® SIP, Siligen® MSI und Siligen® ESI und ein solches auf der Grundlage von Kieselsäureestern ist z.B. unter dem Warenzeichen Siligen® E der BASF Aktiengesellschaft käuflich erwerbbar.

Das Schmelzspinnen kann mit Düsen einer üblichen Kapillargeometrie durchgeführt werden. Vorteilhafterweise werden zum Schmelzspinnen jedoch Düsen mit einer speziellen Kapillargeometrie verwendet, nämlich zweckmäßigerweise solche mit einer Länge von 1 D bis 5 D und einem Kapillardurchmesser von 0,05 bis 2 mm, wobei bei Multifilamenten Kapillardurchmesser von 0,1 bis 0,5 mm und bei Monofilamenten Kapillardurchmesser von 0,5 bis 2 mm insbesondere bevorzugt sind, da durch diese Maßnahme die mechanischen Eigenschaften der erfindungsgemäßen PES-PU-Fäden zusätzlich nachhaltig verbessert und insbesondere PES-PU-Fäden mit einer sehr guten elastischen Erholung und Bruchdehnung erhalten werden können.

Die erfindungsgemäßen PES-PU-Fäden bzw. die nach dem erfindungsgemäßen Verfahren hergestellten PES-PU-Fäden sind aufeinander und bei Multifilamenten auch die Einzelkapillaren untereinander nicht verklebt und besitzen eine hohe Reißfestigkeit bei einer Bruchdehnung, gemessen nach DIN 53 815 von größer als 300 %, vorzugsweise 380 bis 800 % sowie eine niedrige plastische Deformation und eine hohe elastische Erholung (gemessen nach DIN 53 835). Das Dehnungsverhältnis, definiert als Quotient von elastischer Dehnung ED und Gesamt-Dehnung Eges., gemessen nach DIN 53 835 ist größer als 0,8, vorzugsweise 0,85 bis 0,95.

Die textilen Eigenschaften der erfindungsgemäßen PES-PU-Fäden können gegebenenfalls ferner durch eine thermische Nachbehandlung, z.B. durch Tempern bei Temperaturen von 50 bis 170°C, vorzugsweise von 75 bis 130°C in Luft oder in einer Wasserdampfatmosphäre oder z.B. durch Heißnachverstrecken, beispielsweise mit einer Fadenspannung von zweckmäßigerweise 0,05 bis 0,2 cN/dtex, insbesondere hinsichtlich ihrer elastischen Erholung, Reißfestigkeit und Bruchdehnung weiter verbessert werden.

Aufgrund der hohen Wärmeformbeständigkeit der erfindungsgemäß verwendbaren, teilvernetzten TPU und bedingt durch das klebfreie Aufspulen und Abwickeln von der Spinnspule können die erfindungsgemäßen PES-PU-Fäden in vorteilhafter Weise der textilen Weiterverarbeitung, wie z.B. der Anfärbung und Thermofixierung, unterworfen werden.

Die erfindungsgemäßen klebfreien, hochelastischen mono- und multifilen PES-PU-Fäden finden Verwendung zur Herstellung von technischen Fasern und Textilfasern sowie Flächengebilden aus technischen Fasern oder Textilfasern.

Beispiele

Beispiele 1 bis 3 und Vergleichsbeispiele A und B

Allgemeine Herstellungsvorschrift:
Die Herstellung der teilvernetzten TPU erfolgte nach dem one shot-Verfahren.

Eine Mischung aus Polyester-diol und Trimethylolpropan wurde eine Stunde lang bei einer Temperatur von 110°C und einem Druck von 5 mbar entgast. In die Mischung wurde das 1,4-Butandiol eingerührt, die erhaltene klare Lösung wurde auf 70°C erwärmt und danach wurden unter intensivem Rühren (1000 Umdrehungen/Minute) das auf 65°C temperierte 4,4'-Diphenylmethan-diisocyanat hinzugefügt.

Nach Erreichen einer Reaktionstemperatur von 120°C wurde die homogene Reaktionsmischung auf eine mit teflonisiertem Glasfasergewebe ausgekleidete, auf 125°C temperierte Heizplatte mit den Abmessungen 550 x 380 mm gegossen.

Nach einer Reaktionszeit von ungefähr 2 Minuten wurde das erhaltene heiße TPU grob zerkleinert und 15 Stunden bei 100°C im Trockenschrank getempert. Nach dem Abkühlen auf Raumtemperatur wurde mit Hilfe einer Schnittmühle ein TPU-Granulat mit einer Körnung im Bereich von 4 bis 6 mm hergestellt, das zwischengelagert oder unmittelbar nach dem Schmelzspinn-Verfahren versponnen wurde.

Herstellung der multifilen PES-PU-Fäden

Die hergestellten TPU wurde mit einer Extruderspinnvorrichtung, die folgende technischen Kenndaten besaß:

Extruderschneckendurchmesser: 25 mm,
Extruderschneckenlänge: 25 D,
Spinndüse: 30 Loch/0,3 mm Kapillardurchmesser und 0,6 mm Kapillarlänge und
Durchsatz: 1,2 kg/h,
bei einer Schmelztemperatur von 220°C mit einer Spinngeschwindigkeit von 450 m/min., unter Auftragen einer Spinnpräparation auf Polysiloxanbasis (Siligen® MSI der BASF Aktiengesellschaft) und Luftkühlung der frisch gesponnenen PES-PU-Fäden, versponnen.

Die klebfrei aufspulbaren Fäden wurden anschließend 10 Minuten mit 100°C heißer Luft nachbehandelt.

Die zur Herstellung der TPU verwendeten Aufbaukomponenten und ihre Mengen sind in Tabelle I genannt, wobei ihre Bezeichnung folgendermaßen abgekürzt wurde:

| | |
|---|---|
| MDI: | 4,4'-Diphenylmethan-diisocyanat, |
| BUOH: | 1,4-Butandiol, |
| TMP: | Trimethylolpropan, |
| PES: | Lineares Polyester-diol mit einem Molekulargewicht von 2000, hergestellt durch Polykondensation von Adipinsäure mit einer Mischung aus 1,4-Butandiol und 1,6-Hexandiol im Molverhältnis 2:1 |
| CAPA-223: | Lineares Polyester-diol mit endständigen primären Hydroxylgruppen und einem Molekulargewicht von 2000, hergestellt aus Caprolacton (CAPA® 223 der Firma Solvay Interox) |
| CAPA-212: | Lineares Polyester-diol mit endständigen primären Hydroxylgruppen und einem Molekulargewicht von 1000, hergestellt aus Caprolacton (CAPA® 212 der Firma Solvay Interox) |

An den hergestellten PES-PU-Fäden wurden die in Tabelle II genannten mechanischen Eigenschaften gemessen.

EP 0 629 721 A2

Tabelle I

Nach dem one shot-Verfahren hergestellte TPU

| Beispiel | MDI | Polyester-diol | | BuOH | Vernetzungsmittel | |
|---|---|---|---|---|---|---|
| | Menge | Art | Menge | Menge | Art | Menge |
| 1 | 650 g (2,60 mol) | PES | 1500 g (0,76 mol) | 159 g (1,76 mol) | TMP | 3 g (0,022 mol) |
| 2 | 722,9 g (2,89 mol) | CAPA-223 | 1500 g (0,75 mol) | 187,5 g (2,08 mol) | TMP | 1,5 g (0,011 mol) |
| 3 | 913,5 g (3,65 mol) | CAPA-212 | 1500 g (1,5 mol) | 187,5 g (2,08 mol) | TMP | 1,4 g (0,01 mol) |
| Vergleichs-beispiel | | | | | | |
| A | 909,5 g (3,63 mol) | CAPA-212 | 1500 g (1,5 mol) | 187,5 g (2,08 mol) | – | – |
| B | 641,5 g (2,56 mol) | PES | 1500 g (0,76 mol) | 159 g (1,76 mol) | – | – |

Tabelle II

Mechanische Eigenschaften der PES-PU-Fäden, hergestellt durch Schmelzspinnen der TPU nach den Beispielen 1 bis 3 und den Vergleichsbeispielen A und B

| PES-PU-Faden nach Beispiel | Titer | Reißfestigkeit nach DIN 53 815 | Bruchdehnung nach DIN 53 815 | elastische Erholung* nach DIN 53 835 | Verklebungs-temperatur [°C] |
|---|---|---|---|---|---|
| 1 | 521/30 dtex | 0,8 cN/dtex | 448 % | 0,90 | 175 |
| 2 | 586/30 dtex | 1,1 cN/dtex | 399 % | 0,89 | 185 |
| 3 | 618/30 dtex | 0,9 cN/dtex | 394 % | 0,89 | 165 |
| Vergleichs-beispiel | | | | | |
| A | 609/30 dtex | 0,8 cN/dtex | 414 % | 0,88 | 155 |
| B | 514/30 dtex | 0,6 cN/dtex | 417 % | 0,90 | 170 |

* Dehnungsverhältnis

**Patentansprüche**

1. Klebfreie, hochelastische mono- und multifile Polyester-Polyurethan-Elastomerfäden, hergestellt durch Verspinnen einer Schmelze aus einem teilvernetzten thermoplastischen Polyurethan, erhältlich durch

9

Umsetzung von

a) mindestens einem organischen Diisocyanat mit

b) mindestens einem Polyester-diol mit einem Molekulargewicht von 500 bis 5000,

c) mindestens einem difunktionellen Hydroxylgruppen enthaltenden Kettenverlängerungsmittel mit einem Molekulargewicht von 62 bis 380 und

d) mindestens einem mindestens trifunktionellen Hydroxylgruppen enthaltenden Vernetzungsmittel.

2. Klebfreie, hochelastische mono- und multifile Polyester-Polyurethan-Elastomerfäden, hergestellt durch Verspinnen einer Schmelze aus einem teilvernetzten thermoplastischen Polyurethan, erhältlich durch Umsetzung von

a) mindestens einem organischen Diisocyanat mit

einer Mischung aus Polyhydroxylverbindungen, die besteht aus

b) mindestens einem Polyester-diol mit einem Molekulargewicht von 500 bis 5000, hergestellt durch Polykondensation mindestens einer Dicarbonsäure mit 2 bis 12 C-Atomen und mindestens einem Alkandiol mit 2 bis 12 C-Atomen oder mindestens einem Alkylenglykol mit 4 bis 8 C-Atomen oder einer Mischung aus den genannten Alkandiolen und Alkylenglykolen, durch Polykondensation von $\omega$-Hydroxycarbonsäuren mit 4 bis 12 C-Atomen oder durch Polymerisation von $\omega$-Lactonen mit 4 bis 12 C-Atomen,

c) mindestens einem difunktionellen Hydroxylgruppen enthaltenden Kettenverlängerungsmittel mit einem Molekulargewicht von 62 bis 380 und

d) mindestens einem mindestens trifunktionellen Hydroxylgruppen enthaltenden Vernetzungsmittel mit einen Molekulargewicht von 90 bis 400.

3. Klebfreie, hochelastische mono- und multifile Polyester-Polyurethan-Elastomerfäden nach Anspruch 1 oder 2, dadurch gekennzeichnet, daß man zur Herstellung der thermoplastischen Polyurethane als organisches Diisocyanat (a) 4,4'-Diphenylmethan-diisocyanat oder Mischungen aus Diphenylmethan-diisocyanat-Isomeren mit einem Gehalt an 4,4'-Diphenylmethan-diisocyanat von mindestens 96 Gew.-% verwendet.

4. Klebfreie, hochelastische mono- und multifile Polyester-Polyurethan-Elastomerfäden nach Anspruch 1 oder 2, dadurch gekennzeichnet, daß man zur Herstellung der thermoplastischen Polyurethane als Polyester-diole (b) Alkandiol-polyadipate mit 2 bis 6 C-Atomen ein Alkandiolrest, hydroxylgruppenhaltige Polycaprolactone oder Mischungen aus den genannten Polyester-diolen verwendet.

5. Klebfreie, hochelastische mono- und multifile Polyester-Polyurethan-Elastomerfäden nach Anspruch 1 oder 2, dadurch gekennzeichnet, daß man zur Herstellung der thermoplastischen Polyurethane als difunktionelles Kettenverlängerungsmittel (c) 1,4-Butandiol, 1,6-Hexandiol oder Mischungen davon verwendet.

6. Klebfreie, hochelastische mono- und multifile Polyester-Polyester-Polyurethan-Elastomerfäden nach Anspruch 1 oder 2, dadurch gekennzeichnet, daß man zur Herstellung der thermoplastischen Polyurethane als trifunktionelles Vernetzungsmittel (d) Glycerin, Trimethylolpropan oder Mischungen davon verwendet.

7. Klebfreie, hochelastische mono- und multifile Polyester-Polyurethan-Elastomerfäden nach Anspruch 1 oder 2, dadurch gekennzeichnet, daß man zur Herstellung der thermoplastischen Polyurethane die Polyester-diole (b) und Kettenverlängerungsmittel (c) in einem molaren Verhältnis von 1:0,5 bis 1:20 verwendet.

8. Klebfreie, hochelastische mono- und multifile Polyester-Polyurethan-Elastomerfäden nach Anspruch 1 oder 2, dadurch gekennzeichnet, daß man zur Herstellung der thermoplastischen Polyurethane die Vernetzungsmittel (d) in einer Menge von 0,01 bis 10 Mol-%, bezogen auf die Polyester-diole (b) verwendet.

9. Klebfreie, hochelastische mono- und multifile Polyester-Polyurethan-Elastomerfäden nach Anspruch 1 oder 2, dadurch gekennzeichnet, daß man zur Herstellung der thermoplastischen Polyurethane die Komponenten (a) bis (d) in solchen Mengen verwendet, daß das Verhältnis von NCO-:OH-Gruppen im Bereich von 0,9:1 bis 1,1:1 liegt.

**10.** Klebfreie, hochelastische mono- und multifile Polyester-Polyurethan-Elastomerfäden nach Anspruch 1 oder 2, dadurch gekennzeichnet, daß man zur Herstellung der thermoplastischen Polyurethane die Komponenten (a) bis (d) nach dem one shot-Verfahren umsetzt.

**11.** Klebfreie, hochelastische mono- und multifile Polyurethan-Elastomerfäden nach Anspruch 1 oder 2, dadurch gekennzeichnet, daß diese durch Schmelzspinnen mit anschließender kontinuierlicher thermischer Nachbehandlung bei Temperaturen von 50 bis 170°C und Fadenspannungen von 0,05 bis 0,2 cN/dtex hergestellt werden.

**12.** Verfahren zur Herstellung von klebfreien, hochelastischen mono- und multifilen Polyester-Polyurethan-Elastomerfäden, dadurch gekennzeichnet, daß man ein teilvernetztes thermoplastisches Polyurethan, erhältlich durch Umsetzung von
a) mindestens einem organischen Diisocyanat mit
b) mindestens einem Polyester-diol mit einem Molekulargewicht von 500 bis 5000, hergestellt durch Polykondensation mindestens einer Dicarbonsäure mit 2 bis 12 C-Atomen und mindestens einem Alkandiol mit 2 bis 12 C-Atomen oder mindestens einem Alkylenglykol mit 4 bis 8 C-Atomen oder einer Mischung aus den genannten Alkandiolen und Alkylenglykolen, durch Polykondensation von $\omega$-Hydroxycarbonsäuren mit 4 bis 12 C-Atomen oder durch Polymerisation von $\omega$-Lactonen mit 4 bis 12 C-Atomen,
c) mindestens einem difunktionellen Hydroxylgruppen enthaltenden Kettenverlängerungsmittel mit einem Molekulargewicht von 62 bis 380, und
d) mindestens einem mindestens trifunktionellen Hydroxylgruppen enthaltenden Vernetzungsmittel mit einem Molekulargewicht von 90 bis 400,
in Abwesenheit oder Gegenwart einer Spinnpräparation aus der Schmelze verspinnt.

**13.** Verfahren nach Anspruch 12, dadurch gekennzeichnet, daß man die mono- und multifilen Polyester-Polyurethan-Elastomerfäden einer kontinuierlichen thermischen Nachbehandlung bei Temperaturen von 50°C bis 170°C und Fadenspannungen von 0,05 bis 0,2 cN/dtex unterwirft.

**14.** Verfahren nach Anspruch 12, dadurch gekennzeichnet, daß man zur Herstellung der thermoplastischen Polyurethane
- die Polyester-diole (b) und Kettenverlängerungsmittel (c) in einem molaren Verhältnis von 1:0,5 bis 1:20,
- die Vernetzungsmittel (d) in einer Menge von 0,01 bis 10 Mol-%, bezogen auf die Polyester-diole (b) und
- die Komponenten (a) bis (d) in solchen Mengen verwendet, daß das Verhältnis von NCO-:OH-Gruppen im Bereich von 0,9:1 bis 1,1:1 liegt.

**15.** Verwendung der klebfreien, hochelastischen mono- und multifilen Polyester-Polyurethan-Elastomerfäden nach Anspruch 1 oder 2 zur Herstellung von technischen Fasern, Textilfasern und textilen Flächengebilden.